(19) Europäisches Patentamt

European Patent Office

Office européen des brevets

(11) Publication number: **0 189 245 B1**

(12) **EUROPEAN PATENT SPECIFICATION**

(45) Date of publication of the patent specification: **24.08.88**

(51) Int. Cl.⁴: **B 65 G  17/06**, B 65 G  17/12

(21) Application number: **86300060.0**

(22) Date of filing: **07.01.86**

(54) **Articulated belt conveyor.**

(30) Priority: **16.01.85  JP 6144/85**
**14.06.85  JP 130390/85**

(43) Date of publication of application:
**30.07.86 Bulletin 86/31**

(45) Publication of the grant of the patent:
**24.08.88 Bulletin 88/34**

(84) Designated Contracting States:
**DE FR GB SE**

(56) References cited:
**AT - B - 326 038**
**FR - A - 1 102 749**
**FR - A - 2 482 531**
**GB - A - 2 120 194**

(73) Proprietor: **KYOKUTO KAIHATSU KOGYO CO., LTD.,**
**1-45, Koshlenguchi 6-chome, Nishinomiya-shi**
**Hyogo-ken (JP)**

(72) Inventor: **Ueda, Kouzou, 12-13, Fukamidai 4-chome,**
**Yamato-shi Kanagawa-ken (JP)**
Inventor: **Shuto, Hirotetsu, 7-7, Rokkodai-cho Nada-ku,**
**Kobe-shi Hyogo-ken (JP)**
Inventor: **Nagumo, Daisuke, 11-6, Tsukamoto 3-chome**
**Yodogawa-ku, Osaka-shi Osaka-fu (JP)**
Inventor: **Kuriyama, Hiroaki, 337-1, Yoneda Yoneda-cho,**
**Takasago-shi Hyogo-ken (JP)**

(74) Representative: **Calderbank, Thomas Roger et al,**
**MEWBURN ELLIS & CO. 2/3 Cursitor Street, London**
**EC4A 1BQ (GB)**

ACTORUM AG

## Description

The present invention relates to a conveyor system, e.g. for conveying corrugated cardboard boxes, pulverized materials or the like.

In a conventional conveying apparatus, such as that shown, for example, in FR-A-2 482 531 on which the precharacterising part of claim 1 is based, there is provided an endless chain passed around a pair of sprockets which are arranged at the front and rear ends on opposite sides of the conveying apparatus, a plurality of support members each having a rectangular cross-section and fitted to the chain on each side of the conveying apparatus in parallel, and a plurality of gaps each defined between adjacent support members for permitting smooth movement of the support members in a circular arc state at the front and rear ends of the conveying apparatus. In GB-A-2 120 194, there are disclosed covering members covering each gap between the support members.

The above known construction is suitable for conveying corrugated cardboard boxes, sacks, bags, etc. However, when pulverized materials or the like are transported, a conveying appartatus of a different type is required to avoid spilling the pulverized materials between adjacent support members which would give a consequently low work efficiency.

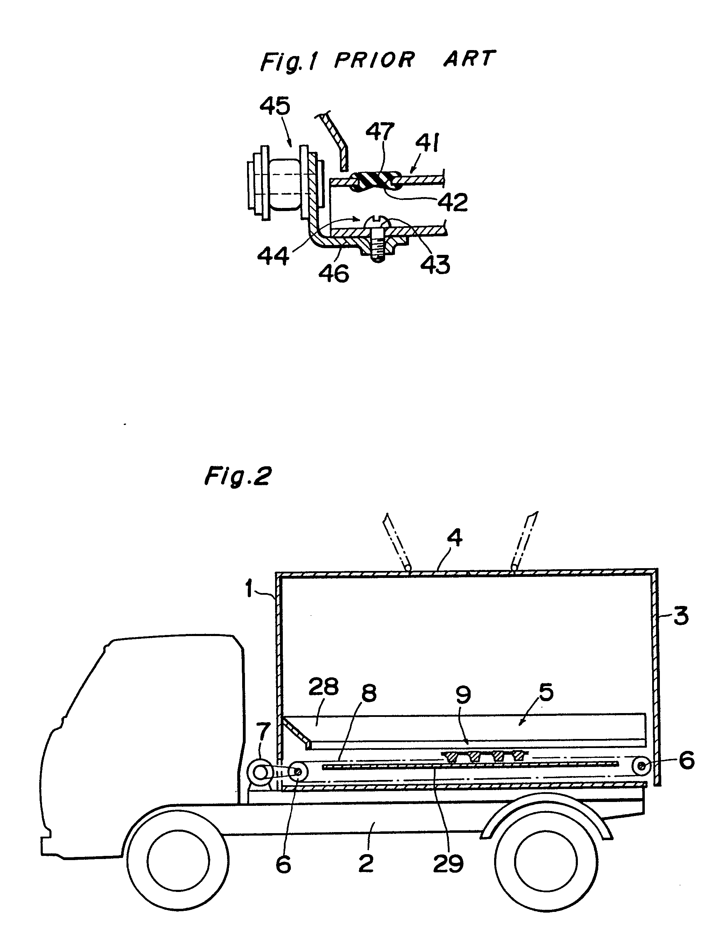

Fig. 1 of the accompanying drawings shows a part of another known conveying apparatus wherein each of the support members 41 having a boxe-like cross-section is connected to a chain 45 in a manner that the support member 41 is connectively screwed down to an L-shaped fastening member 46 extending downwardly from the chain 45 by means of a connecting member 44 through an upper side opening 42 having a large diameter and a lower side opening 43 having a small diameter, each of which is defined on the support member 41. Upon connection of the support member 41 with the L-shaped fastening member 46, the upper side opening 42 of the support member 41, is covered with a rubber cap 47 so as to prevent a portion of each object to be carried from being caught in the opening 42 or the pulverized materials from entering thereinto.

In the construction as described above, however, it is difficult to connect the support member 41 with the chain 45, since it is necessary to fix two kinds of different members such as the connecting member 44 and the rubber cap 47 to the support member 41 for the above described work.

Accordingly, the present invention seeks to provide a conveying apparatus with an improved work efficiency, which is capable of transporting not only corrugated cardboard boxes, sacks, bags, etc., but also pulverized materials or the like by arranging each of a plurality of covering members between adjacent support members which are connected to a chain on each side of the conveying apparatus.

The present invention also seeks to provide a conveying apparatus of the above described type, wherein each of the covering members has a prolonged life by practically eliminating both of tension and compression thereon in case of its travelling not only in a horizontal direction but also in a circular arc state, since the position of the covering member is substantially coincident with each of pitch circles of the sprockets.

In accordance with the present invention, there is provided a conveying apparatus comprising:

a pair of endless chains passed around a pair of spockets at the end of the apparatus, adjacent links in each chain having a single pivoting axis;

a plurality of rectangular cross-sectioned support members, arranged at regular intervals and extending at right angles to the direction of travel of the support members, adjacent support members being attached to alternate links in each chain by a plurality of fastening members, the fastening members and support members being connected by connecting means;

a plurality of covering members securely connected to the support members;

characterised in that:

the covering members are each connected to a pair of support members for covering each gap defined therebetween, at, or substantially at, the corners of the support members adjacent the conveyor carrying surface, and a pair of holding portions are formed on opposite faces of each support member and a pair of connecting portions are formed at opposite ends of each covering member so that said connecting portions may be detachably coupled to said holding portions of adjacent support members.

Embodiments of the invention will now be described in detail, by way of example, with reference to the accompanying drawings, in which:

Fig. 1 is a sectional view of a connecting part of a support member and a chain of a conventional conveying apparatus (and has already been referred to);

Fig. 2 is a schematic diagram of a conveying apparatus according to one embodiment of the present invention which is installed in a automobile truck;

Fig. 3 is a longitudinal sectional view, on an enlarged scale, of a part of the conveying apparatus;

Fig. 4 is a cross-sectional view taken along the line IV-IV in Fig. 3;

Fig. 5 is an exploded sectional view of a part of the conveying apparatus;

Fig. 6 is a sectional view of a covering member of the conveying apparatus, and illustrates a modification of the arrangement of Fig. 5;

Fig. 7 is a sectional view of a covering member of the conveying apparatus which shows another modification of the arrangement of Fig. 5;

Fig. 8 is a sectional view, on an enlarged scale, of the main portion of the conveying apparatus;

Fig. 9 is an exploded sectional view of a part of Fig. 8;

Fig. 10 is a sectional view taken along the line X-X in Fig. 8;

Fig. 11 is a top plan view as observed in the direction of arrows XI-XI in Fig. 8;

Fig. 12 is a fragmentary perspective view of the main portion of the conveying apparatus; and

Fig. 13 is a sectional view, on an enlarged scale, similar to Fig. 9 which particularly shows a modification thereof.

Before the description of the present invention proceeds, it is to be noted like parts are designated by like reference numerals throughout the accompanying drawings.

Referring now to the drawings, there is shown in Fig. 2a a conveying apparatus according to one preferred embodiment of the present invention which is installed in an automobile truck. The automobile truck is provided with a box-like body 1 arranged on a vehicle body 2, a door 3 at the rear end of the body 1, a top cover 4 at the upper portion thereof, the conveying apparatus 5 disposed at the lower portion thereof and directly related to the present invention, guide plates 28 disposed on inner wall of the body 1 and a supporting member 29 for suppporting a conveyer body 9.

The conveying apparatus 5 according to the present invention comprises a pair of sprockets 6 at its front and rear ends, a driving motor 7 connected to the front end sprocket 6, a pair of endless chains 8 passed around the sprockets 6 on each side of the conveying apparatus 5, and the conveyer body 9 having a plurality of support members 10 and a plurality of covering members 11 for covering gaps between adjacent support members 10, with the chains 8 being attached to the conveyer body 9 so as to move it to and fro while driven by the driving motor 7.

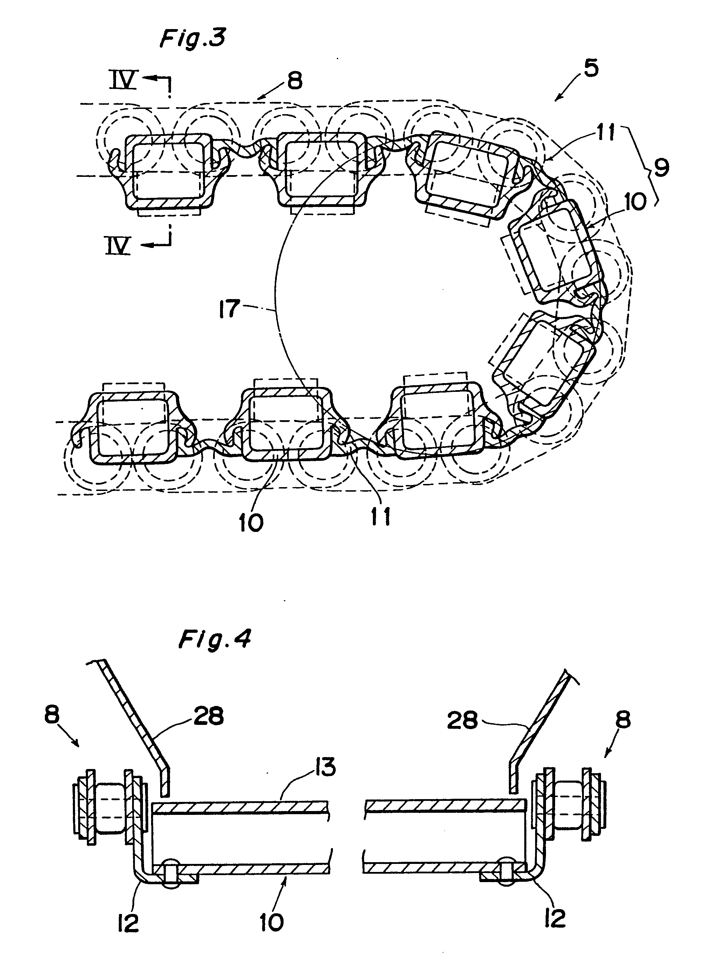

Referring also to Figs. 3, 4 and 5, each of the support members 10 having a rectangular cross section extends in a transverse direction, that is, in a direction right-angled or normal to the direction in which the support members 10 travel and is securely fixed at its lower portion on an L-shaped fastening member 12 extending downwardly from the chain 8 on each side of each support member 10 so as to support various objects to be carried on its flat upper surface. Each of the support members 10 is further provided with a pair of holding portions 14 at its front and rear faces, with each of the holding portions 14 being opened at its upper side. In addition, the holding portion 14 is so formed in the distance between the holding portion 14 and front or rear face of the support member 10 that the distance on upper side is slightly shorter than that on lower side. Each of the covering members 11 extending in a transverse direction and having approximately the same length as that of the support member 10, is generally formed in a shape similar to that of a figure «U» in cross section and is provided with a flexible portion 15 at its center, which is slightly bent, and hard connecting portions 16 at its front and rear ends for engagement with the holding portions 14 of the support members 10, with each of the connecting portions 16 having lower portion slightly thicker than upper portion. The covering member 11 is engaged with the support member 10 in a manner that the connecting portion 16 of the covering member 11 is connected downwards to the holding portion 14 of the support member 10 and the covering member 11 can be disengaged from the support member 10 by being lifted up. This remarkably facilitates exchanging work for the covering members 11. Furthermore, it is so designed that in case of the engagement of the connecting portions 16 of the covering member 11 with the holding portions 14 of the support members 10, the position of each covering member 11 is substantially coincident with each of pitch circles 17 of the sprockets 6 so as to reduce an alteration of deflection amount of the flexible portion 15 of the covering member 11.

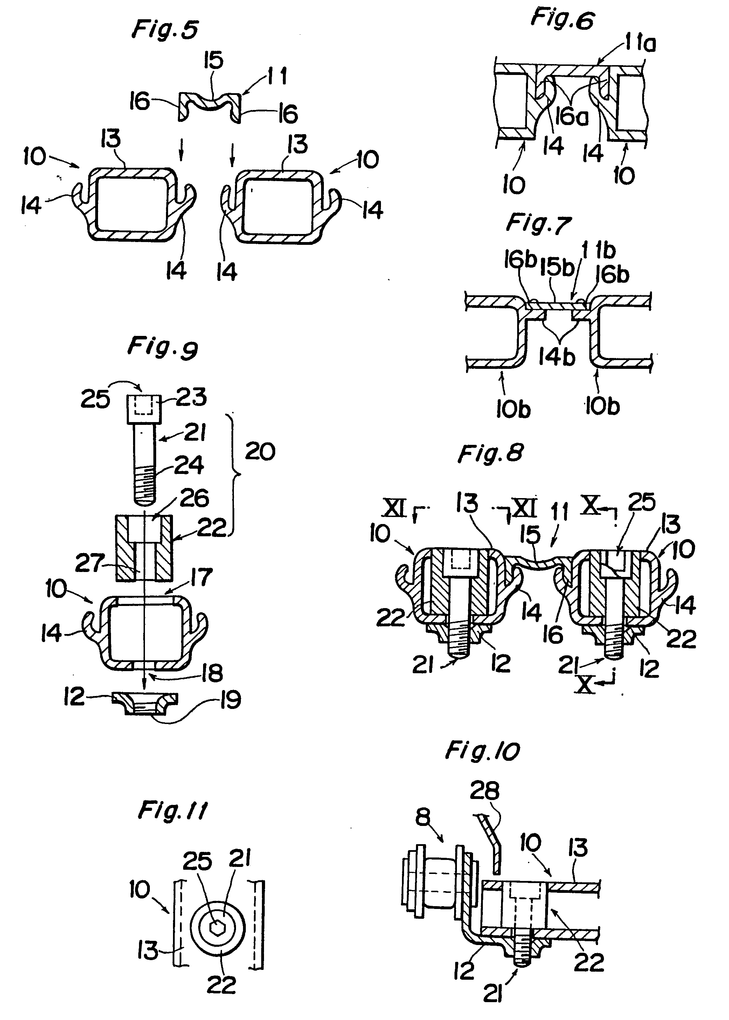

There is shown in Fig. 6 a modification of the covering member 11a having a flexible flat upper surface which is approximately on a level with that of the support member 10 in case that each of the connecting portions 16a of the covering member 11a is engaged with each of the holding portions 14 of adjacent support members 10. This results in stable support of the carrying objects and easy cleaning on the conveyer body 9.

Fig. 7 further illustrates another modification of the covering member 11b which is like a flat plate, and has a central flexible portion 15b, whereby the covering member 11b is capable of expanding and contracting to some extent and hard connecting portions 16b at its opposite ends whereby the covering member 11b is connectively bolted to connecting portions 14b of adjacent support members 10b.

Furthermore, in each of the above described modifications, it is so designed that a changing amount of the covering member 11a in expansion and contraction thereof can be reduced owing to substantial coincidence between the position of the covering member 11a or 11b and each of pitch circles 17 of the sprocket 6, as well as the foregoing embodiment.

It is to be noted here that in the foregoing embodiment, although the covering member 15 has the flexible portion 15 at its central portion and the hard connecting portions 16 at its front and rear sides, the construction may be so modified that the whole covering member 11, 11a or 11b has a flexibility and is fixedly bolted at its opposite ends onto the support members 10 through holding plates.

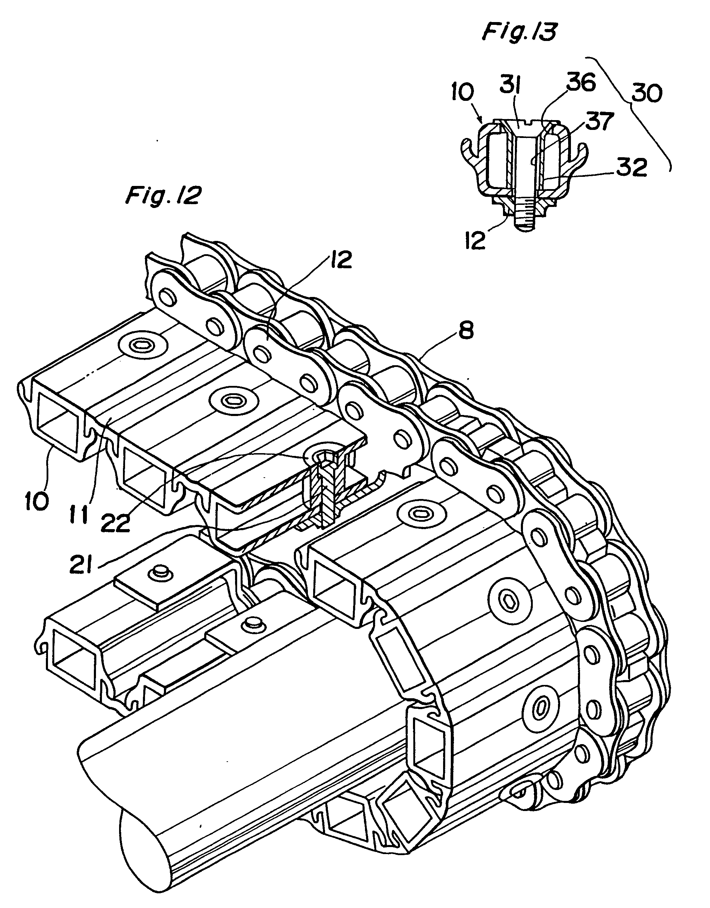

Referring next to Figs. 8 through 12, there is shown a connecting manner in which each of the support members 10 is connected with each of the chains 8. The support member 10 is provided, on its opposite sides, with an opening 17 having a large diameter formed on its upper surface and the other opening 18 having a small diameter formed on its lower surface, and furthermore, the L-shaped fastening member 12 is provided with a screwed opening 19 at a position immediatley under the lower opening 18 of the support member 10. Connecting members 20 for connecting the support member 10 with the chain 8 are composed of a fastening bolt 21 and a spacer 22, both of which are generally commercially available. The fastening bolt 21 is provided with a head portion 23 having a large diameter and a screwed portion 24 having a small diameter. The fastening bolt 21 is screwed down to the screwed opening 19 of the fastening member 12 by being rotated with a hexagonal wrench which is inserted into a hexagonal opening 25 defined at the central portion on the upper surface of the head portion 23 of the fastening bolt 21. The spacer 22 has an outer diameter approximately the same as the inner diameter of the upper side opening 17 of the support member 10, an opening 26 which has a large inner diameter approximately the same as the outer diameter of the head portion 23 of the fastening bolt 21 and the other opening 27 which has a small inner diameter approximately the same as the outer diameter of the screwed portion 24 of the fastening bolt 21. When the fastening bolt 21 is screwed down to the fastening member 12 through both of the openings 26 and 27 of the spacer 22 for securely connecting the support member 10 with the chain 8, the spacer 22 comes in contact with the inner surface of the support member 10 at its lower surface for securing the spacer 22 in the support member 10 and the upper surface of the spacer 22 is on a level with that of the support member 10 so as to close the upper side opening 17 of the support member 10 with the spacer 22.

Fig. 13 illustrates another example of the connecting members 30 comprising a countersunk bolt 31 which is generally commercially available for being employed as the fastening bolt 31, and a spacer 32 provided with a taperad opening 36 and an opening 37 having a small diameter so as to fit the countersunk bolt 31 well, with the upper side opening 17 of the support member 10 being closed with the countersunk bolt 31 and the spacer 32.

It is to be noted here that in the foregoing embodiments, although the fastening member 12 is provided with the screwed opening, it may be so modified that the fastening bolt is screwed into a nut arranged under the fastening member 12 so as to connect the support member 10 with the fastening member 12 by fastening the nut to the bolt. When the support member 10 is exchanged in such a trouble as deformation thereof, since the support member 10 can be removed from the chain 8 by unfastening the fastening bolt 21 from the fastening member 12, a simplified exchanging work for the support member 10 can be attained.

Subsequently, functioning of the conveying apparatus having the construction as described so far will be explained hereinafter.

In the first place, in case of transportation of corrugated cardboard boxes, the door 3 at the rear end of the body 1 is opened for placing the carrying objects on the conveyer body 9 and thereafter, the carrying objects are transferred frontwards with frontward movement of the conveyer body 9 driven by the driving motor 7, while the carrying objects are simultaneously placed by turns and finally the door 3 is closed prior to the transportation of the carrying objects to a destination. Upon arrival of the carrying objects to the destination, the door 3 is firstly opened and the carrying objects can be unloaded one after another by moving the conveyer body 9 backwardly. At this moment, since each of the support members 10 has a flat upper surface 13, the carrying objects can be supported thereon in a stable state.

In the next place, when pulverized materials or the like are transported, the top cover 4 is firstly opened for loading the pulverized materials on the conveyer body 9 therethrough and when the body 1 has become full of the pulverized materials, the top cover 4 is closed prior to the transportation of the pulverized materials to a destination. Upon arrival of the pulverized materials to the destination, the pulverized materials can be unloaded in the same manner as the unloading manner of the corrugated cardboard boxes as described above. At this instant, since the covering member 11 is arranged between adjacent support members 10 of the conveyer body 9, such an apprehension is completely avoidable that the pulverized materials or the like drop undesirably through between the support members 10 and in addition, even in case that the conveyer body 9 travels in a circular arc state at its front and rear ends, since each of the covering member 11 has the flexible portion 15, the conveyer body 9 can smoothly travel at both ends thereof.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as being included therein.

## Claims

1. A conveying apparatus comprising:
a pair of endless chains (8) passed around a pair of sprockets (6) at the ends of the apparatus, adjacent links in each chain (8) having a single pivoting axis;
a plurality of rectangular cross-sectioned support members (10), arranged at regular intervals and extending at right angles to the direction of travel of the support members (10), adjacent support members (10) being attached to alternate links in each chain (8) by a plurality of fastening members (12), the fastening members (12) and support members (10) being connected by connecting means (21, 31; 22, 32);
a plurality of covering members (11, 11a, 11b) securely connected to the support members (10);
characterised in that:
the covering members (11, 11a, 11b) are each connected to a pair of support members (10) for covering each gap defined therebetween, at, or substantially at, the corners of the support members adjacent the conveyor carrying surface, and a pair of holding portions (14) are formed on opposite faces of each support member (10) and a pair of connecting portions (16) are formed at opposite ends of each covering member (11) so that said connecting portions (16) may be detachably coupled to said holding portions (14) of adjacent support members (10).

2. A conveying apparatus according to claim 1, wherein said connecting means (21, 31; 22, 32) comprises a spacer (22, 32) for closing an upper side opening (17) defined on each end of each support member (10) and a fastening bolt (21, 31) for connectively bolting said support member (10) to said fastening member (12) through said spacer (22, 32) and a lower side opening (18) defined on each end of each said support member (10), with said upper side opening (17) having a large inner diameter and said lower side opening (18) having a small inner diameter.

3. A conveying apparatus according to claim 1 or claim 2, wherein said covering member (11) has a central flexible portion (15) which is bent.

4. A conveying apparatus according to claim 1 or claim 2, wherein said covering member (11a) has a flexible flat upper surface which is approximately on a level with that of said support member (10).

5. A conveying apparatus according to claim 1 or claim 2, wherein said covering member (11b) is in the form of a flat plate, and has a central flexible portion (15b) whereby said covering member (11b) is capable of expanding and contracting.

6. A conveying apparatus according to any one of the preceding claims, wherein the position of each said covering member (11, 11a, 11b) is substantially coincident with each of pitch circles (17) of the sprockets (6).

**Revendications**

1. Convoyeur comprenant:
deux chaînes sans fin (8) passant autour de pignons (6) aux extrémités du convoyeur, les maillons voisins de chaque chaîne (8) ayant un seul axe d'articulation;
des éléments de support de section droite rectagulaire, sous forme de palettes ou barrettes (10), disposés à intervalles réguliers et orientés transversalement à leur direction de défilement, les barrettes (10) étant attachées à un maillon sur deux de chaque chaîne (8) par des pièces de fixation (12), elles-mêmes reliées aux barrettes (10) par des moyens d'assemblage (21, 31; 22, 32); ainsi que
des éléments de recouvrement (11, 11a, 11b) attachés solidement aux barrettes (10);
caractérisé en ce que:
les éléments de recouvrement (11, 11a, 11b) sont montés chacun sur deux barrettes (10) voisines, de manière à fermer l'intervalle entre elles, au droit des angles ou à peu près au droit des angles des barrettes adjacent à la surface de transport du convoyeur, le montage étant réalisé au moyen de deux parties de maintien (14) formées sur les faces dirigées l'une vers l'autre des deux barrettes (10) et de deux parties d'attache (16) formées sur les bords opposés de l'élément de recouvrement (11), dans un agencement qui permet de détacher les parties d'attache (16) de l'élément de recouvrement des parties de maintien (14) des barrettes (10) voisines.

2. Convoyeur selon la revendication 1, dans lequel chaque moyen d'assemblage (21, 31; 22, 32) pour relier une barrette (10) à une pièce de fixation (12) pour l'attache à une chaîne (8), se compose d'une entretoise (22, 32) qui ferme un trou supérieur (17) de l'extrémité correspondante de la barrette (10), ainsi que d'une vis d'assemblage (21, 31) pour relier la barrette (10) à la pièce de fixation (12) à travers l'entretoise (22, 32) et un trou inférieur (18) de l'extrémité de la barrette, le trou supérieur (17) ayant un grand diamètre et le trou inférieur (18) ayant un petit diamètre.

3. Convoyeur selon la revendication 1 ou 2, dans lequel l'élément de recouvrement possède une partie centrale flexible (15) qui est courbe.

4. Convoyeur selon la revendication 1 ou 2, dans lequel l'élément de recouvrement (11a) possède une surface supérieure flexible qui est plane et est située sensiblement dans le même plan que la face supérieure de la barrette (10).

5. Convoyeur selon la revendication 1 ou 2, dans lequel l'élément de recouvrement (11b) est une plaquette plane et possède une partie centrale flexible (15b) qui permet des allongements et des compressions de l'élément de recouvrement (11b).

6. Convoyeur selon l'une quelconque des revendications précédentes, dans lequel les éléments de recouvrement (11, 11a, 11b) suivent sensiblement les cercles primitifs des pignons de renvoi (6) aux extrémités du convoyeur.

**Patentansprüche**

1. Fördervorrichtung mit
einem Paar endloser Ketten (8), die um ein Paar Kettenräder (6) an den Enden der Vorrichtung geführt sind, wobei benachbarte Glieder jeder Kette (8) eine einzige Gelenkachse haben;
einer Anzahl Stützteile (10) mit Rechteckquerschnitt, die in regelmässigen Abständen angeordnet sind und sich quer zur Laufrichtung der Stützteile (10) erstrecken, wobei benachbarte Stützteile (10) an aufeinanderfolgenden Gliedern in jeder Kette (8) durch eine Anzahl Befestigungselemente (12) befestigt und die Befestigungselemente (12) und die Stützteile (10) durch Verbindungsmittel (21, 31; 22, 32) verbunden sind;
einer Anzahl von Abdeckteilen (11, 11a, 11b), die fest mit den Stützteilen (10) verbunden sind,
dadurch gekennzeichnet, dass die Abdeckteile (11, 11a, 11b) jeweils mit einem Paar von Stützteilen (10) im wesentlichen an deren an der Tragfläche des Förderers liegenden Ecken derart verbunden sind, dass sie die jeweils dazwischen gebildete Lücke überbrücken, und dass ein Paar von Haltestützen (14) an gegenüberliegenden Seiten jedes Stützteils (10) sowie ein Paar von Verbindungsabschnitten (16) an gegenüberliegenden Enden jedes Abdeckteils (11) so angeformt sind, dass die Verbindungsabschnitte (16) lösbar mit den Halteabschnitten (14) der angrenzenden Stützteile (10) kuppelbar sind.

2. Fördervorrichtung nach Anspruch 1, dadurch gekennzeichnet, dass die Verbindungsmittel (21, 31; 22, 32) einen Abstandhalter (22, 32) zum Verschliessen einer oberen Öffnung (17) an jedem Ende jedes Stützteils (10) und eine Befestigungsschraube (21, 31) zum Anschrauben des Stützteils (10) an dem Befestigungsteil (12) durch den Abstandhalter (22, 32) und eine untere Öffnung (18) in jedem Ende jedes Stützteils (10) aufweisen, wobei die obere Öffnung (17) einen grossen Innendurchmesser und die untere Öffnung (18) einen kleinen Innendurchmesser hat.

3. Fördervorrichtung nach Anspruch 1 oder 2, dadurch gekennzeichnet, dass das Abdeckteil (11) einen flexiblen Mittelteil (15), der gebogen ist, aufweist.

4. Fördervorrichtung nach Anspruch 1 oder 2, dadurch gekennzeichnet, dass das Abdeckteil (11a) eine flexible flache obere Fläche aufweist, die im wesentlichen in gleicher Ebene wie die des Stützteils (10) liegt.

5. Fördervorrichtung nach Anspruch 1 oder 2, dadurch gekennzeichnet, dass das Abdeckteil (11b) die Form einer flachen Platte hat und einen flexiblen Mittelteil (15b) aufweist, wodurch das Abdeckteil (11b) sich ausdehnen und zusammenziehen kann.

6. Fördervorrichtung nach einem der Ansprüche 1 bis 5, dadurch gekennzeichnet, dass die Position jedes Abdeckteils (11, 11a, 11b) im wesentlichen mit den jeweiligen Teilkreisen (17) der Kettenräder (6) übereinstimmt.

0 189 245

*Fig.1 PRIOR ART*

*Fig.2*

7

*Fig.3*

*Fig.4*

Fig.5

Fig.6

Fig.7

Fig.9

Fig.8

Fig.11

Fig.10

0 189 245

*Fig.13*

*Fig.12*

13